(19) Europäisches Patentamt
European Patent Office
Office européen des brevets

(11) EP 2 354 710 B1

(12) **FASCICULE DE BREVET EUROPEEN**

(45) Date de publication et mention
de la délivrance du brevet:
**12.06.2013 Bulletin 2013/24**

(21) Numéro de dépôt: **11151147.3**

(22) Date de dépôt: **17.01.2011**

(51) Int Cl.:
*F24H 8/00* *(2006.01)*  *B01D 53/00* *(2006.01)*
*B01D 53/50* *(2006.01)*  *F23J 15/04* *(2006.01)*
*F23J 15/06* *(2006.01)*  *F01K 9/00* *(2006.01)*
*B01D 53/26* *(2006.01)*

(54) **Dispositif et procédé de récupération de chaleur dans les fumées d'une centrale thermique**

Vorrichtung und Verfahren zur Wärmerückgewinnung im Rauchgakanal eines Wärmekraftwerks

Device and method for recovering heat from the fumes of a thermal power station

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **21.01.2010 FR 1050410**

(43) Date de publication de la demande:
**10.08.2011 Bulletin 2011/32**

(73) Titulaire: **Pyraine**
**33600 Pessac (FR)**

(72) Inventeur: **Ecalle, Olivier**
**33000 Bordeaux (FR)**

(74) Mandataire: **Regimbeau**
**20, rue de Chazelles**
**75847 Paris Cedex 17 (FR)**

(56) Documents cités:
**EP-A1- 1 685 890      EP-A2- 0 857 923
DE-A1- 4 228 471      DE-A1-102007 005 578
FR-A1- 2 637 510      FR-A1- 2 750 346
US-A- 2 324 193        US-A- 4 340 572
US-A1- 2006 156 761**

**Description**

DOMAINE TECHNIQUE GENERAL

La présente invention concerne un dispositif améliorant les rendements des centrales thermiques.

Plus précisément, elle concerne l'application d'un dispositif de récupération de la chaleur latente contenue dans la vapeur d'eau de gaz chauds et humides des les fumées de combustion à la production d'électricité par biomasse, fonctionnant avec une turbine à vapeur dite à « condensation »

ETAT DE L'ART

Le terme de biomasse regroupe l'ensemble des matières organiques pouvant devenir des sources d'énergie. Ces matières organiques qui proviennent des plantes sont une forme de stockage de l'énergie solaire, captée et utilisée par les plantes grâce à la chlorophylle. Utilisée soit directement, soit après des transformations chimiques comme une méthanisation, la biomasse libère de l'énergie thermique en brulant. Dans le cas d'une centrale à biomasse, cette énergie thermique est classiquement convertie en électricité via une turbine à vapeur et un alternateur.

Bien que la combustion de biomasse s'accompagne comme pour le charbon, le gaz ou le pétrole de libération de carbone, il ne faut pas oublier que le carbone stocké dans la biomasse a récemment été extrait de l'atmosphère par la photosynthèse des plantes ou algues, alors que ce processus a eu lieu il y a des millions d'années pour les ressources fossiles. C'est pourquoi l'énergie tirée de la biomasse est considérée comme une énergie renouvelable, au sens premier du terme : si la surface dévolue à la culture de biomasse reste constante et la quantité prélevée est replantée, il y a renouvellement de l'énergie et le cycle du carbone est constant.

Cependant, la biomasse est une énergie chère qui peut avoir un bilan carbone désastreux si elle est mal utilisée. Il convient d'optimiser au maximum le rendement énergétique pour des raisons autant économiques qu'environnementales.

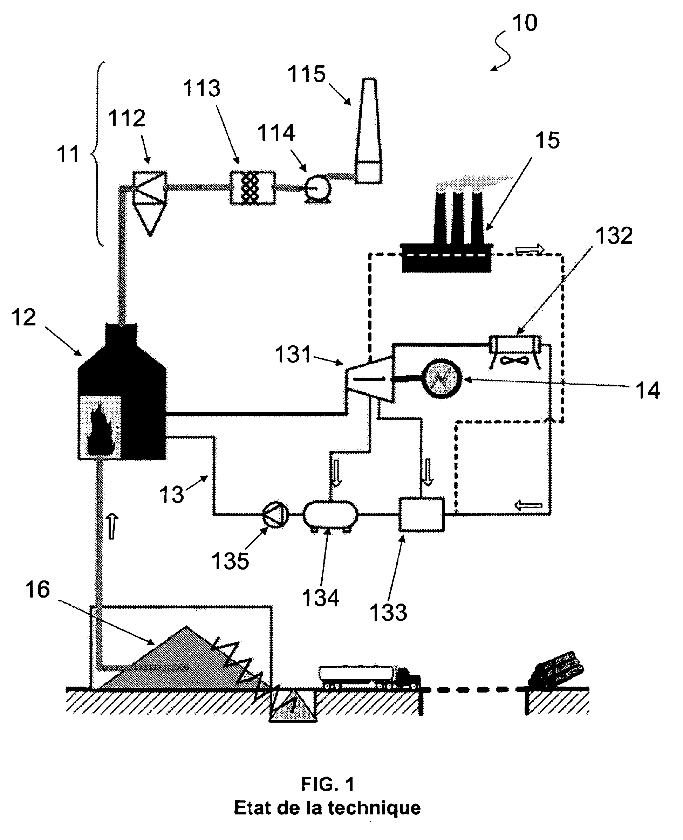

Un exemple d'une installation 10 classique mais néanmoins performante de production d'électricité à partir de la biomasse est représentée figure 1.

La chaudière 12 est le lieu où se déroule la combustion de la biomasse stockée dans un espace 16. La chaleur produite permet la vaporisation d'eau liquide en vapeur haute pression (40 à 110 bar) dans un circuit 13, qui alimente une turbine 131 entraînant un alternateur 14 produisant l'électricité. On appelle le circuit 13 circuit de vapeur, mais c'est également un circuit d'eau puisque la vapeur est condensée dans une partie du circuit.

Dans ce type d'installation optimisée, une partie de la vapeur peut être extraite à une pression intermédiaire (3 à 15 bar) pour alimenter un client 15 consommateur de vapeur. L'utilisation directe de la vapeur permet un fonctionnement en cogénération avec production simultanée d'électricité et de chaleur. C'est un moyen parmi les plus efficaces énergétiquement, particulièrement adapté à la grosse consommation industrielle d'une usine.

Le reste de la vapeur va se détendre à basse pression et basse température (0,05 bar, à 30°C par exemple) et se condenser dans un condenseur 132, qui rejette à l'environnement la chaleur de condensation de la vapeur d'eau. L'eau liquide (autour de 33°C) sortant du condenseur 132 est alors réchauffée par de la vapeur extraite de la turbine 131 pour la remonter à 90°C, puis à 150°C au niveau de deux « bâches » successives.

La première bâche 133 sert à recueillir et réchauffer l'eau liquide provenant du condenseur 132. La deuxième bâche 134 sert, en étant à pression supérieure à l'atmosphère, à éliminer par dégazage des impuretés gazeuses tel l'oxygène qui s'infiltrent dans le réseau d'eau et risquent de corroder la chaudière. Alternativement, suivant la taille de l'installation, il n'y a que la bâche dégazeuse 134 ou au contraire plusieurs bâches de réchauffage. L'eau liquide préchauffée est enfin réinjectée dans la chaudière 12, par exemple grâce à une pompe liquide 135, pour y être vaporisée.

A l'autre extrémité de la centrale, les fumées sortent de la chaudière 12 et entrent dans le système d'évacuation 11. Elles passent successivement à travers un cyclone 112 conçu pour éliminer les poussières de taille importante, puis un filtre 113 (à manche ou électrofiltre) pour compléter l'épuration des fumées avant sortie par la cheminée 115 via un ventilateur de tirage 114.

Une des spécificités de la combustion de la biomasse (bois, pailles,...) est la présence de soufre dans le combustible végétal, que l'on retrouve dans les fumées. Celui-ci réagit avec l'oxygène encore présent dans les fumées pour former du S03 qui réagit ensuite avec l'eau pour former de l'acide sulfurique H2S04.

En dessous d'une température d'environ 150°C, appelée le « point de rosée acide », cet acide est susceptible de se condenser sur les parois des cheminées, et de les abimer très rapidement.

Mais comme les teneurs en soufre restent suffisamment faibles pour ne pas nécessiter un traitement d'épuration spécifique comme pour un incinérateur, les chaudières équipant ce type d'installation sont tout simplement conçues par leurs constructeurs de façon à rejeter des fumées à une température de 160 à 180°C.

A une température aussi élevée, les fumées contiennent encore une énergie importante qu'il serait intéressant de valoriser. Cette énergie perdue se décompose en chaleur sensible (chaleur due la température élevée des fumées) et en chaleur latente (chaleur due à l'état gazeux de la vapeur, plus énergétique que l'état liquide) qui représentent (selon les combustibles) environ 10 % et 10 % de la puissance apportée par le combustible.

Il serait possible de valoriser cette énergie "basse température" par le préchauffage de l'eau liquide sortant du condenseur. Cela éviterait d'utiliser de la vapeur pour ce faire, on augmenterait ainsi la quantité de vapeur passant par la turbine, d'où le rendement électrique. Diverses solutions sont proposées.

On peut tout d'abord utiliser un économiseur, c'est à dire un simple échangeur métallique dans lequel circulerait l'eau sortant du condenseur. Ce système classique remplit la fonction thermique demandée mais présente l'inconvénient d'un très lourd investissement. En effet la condensation progressive de l'acide sulfurique nécessite d'utiliser un matériau totalement inoxydable comme l'Inconel®, très cher. De plus, les échanges thermiques avec des fumées sur une interface solide s'avèrent très mauvais, et sont aggravés par l'encrassement progressif de l'échangeur, du fait des poussières et imbrulés de la combustion de biomasse solide.

Des systèmes plus récents comme celui décrit dans les brevets EP0857923 et US4340572, qui divulgue un dispositif selon le préambule de la revendication 1, permettent de se passer d'un échangeur en utilisant des solutions hygroscopiques injectées dans les fumées. La solution chauffe et absorbe de la vapeur d'eau au fur et à mesure de sa chute, et donc récupère à la fois de la chaleur sensible et de la chaleur latente.

En outre, la présence de calcium dans le sel hygroscopique (nitrate de calcium) a un effet connu d'absorption du soufre et de ses oxydes S02, SO3, H2SO4, qui diminue les problématiques de corrosion post traitement.

Cependant, cette technologie n'est pas applicable telle quelle, puisqu'une source d'énergie est nécessaire pour faire bouillir la solution pour la reconcentrer. Cette énergie est en effet apportée soit par de la vapeur extraite de la turbine, et alors le but recherché qui est de maximiser la quantité de vapeur traversant les étages basse pression de la turbine est anéanti, soit par une source extérieure (chaudière spécifique par exemple), au prix d'un lourd investissement et d'une consommation supplémentaire d'énergie, laquelle va aussi à l'encontre de l'objectif du système.

Le système décrit dans le brevet DE3916705 apporte une première solution à ce problème en proposant un système à solution hygroscopique ne nécessitant pas de bouilleur. Grâce une construction particulière, la solution subit successivement une phase d'absorption de vapeur d'eau, puis une phase d'évaporation pendant sa chute. Le bilan est donc nul pour la chaleur latente, seule de la chaleur sensible (qui représente moins d'énergie que la chaleur latente) est récupérée.

De plus, une spécificité des cogénérations est que l'appel de vapeur du client "chaleur" peut varier significativement. Et ceci, sans que la chaudière fasse évoluer sa production de vapeur. Ceci entraine une variabilité importante de la quantité de vapeur passant dans le condenseur : celle-ci peut varier fréquemment du simple au double, multipliant d'autant l'énergie nécessaire à son réchauffage. Or ce système impose un équilibre entre les deux phases, et il n'y a de moyen possible de contrôle de l'énergie absorbée :

- si le client 15 appelle plus de vapeur, il y en a moins qui transite par le condenseur 132, et la demande "extérieure" en énergie baisse. La solution s hygroscopique peut alors monter en température et se concentrer. Le risque de cristallisation de la solution et de colmatage des tuyaux apparait.
- si au contraire le client 15 n'appelle plus de vapeur, toute la production de la chaudière 12 va vers le condenseur 132, et la demande "extérieure" en énergie augmente. La solution s baisse en température et devient moins concentrée en sel, entraînant une variation de volume significative, jusqu'à +50% !

Ces problèmes ne sont pas acceptables car ils ne sont pas compatibles avec une utilisation fiable et rentable du dispositif.

PRESENTATION DE L'INVENTION

L'invention propose de pallier ces inconvénients en proposant un dispositif permettant de récupérer l'énergie sensible et latente des fumées sans nécessiter lui-même un apport d'énergie extérieure.

A cet effet, l'invention propose un dispositif de récupération de chaleur dans des fumées contenant de la vapeur d'eau, circulant dans un conduit, d'une installation thermique de production d'électricité comprenant un circuit de vapeur sur lequel sont disposés au moins une turbine à vapeur et un condenseur, le dispositif étant caractérisé en ce qu'il comprend :

- un circuit principal pour la circulation d'une solution hygroscopique ;
- un moyen d'injection liquide depuis le circuit principal vers le conduit, de sorte que la solution hygroscopique se dilue en absorbant la vapeur d'eau des fumées circulant dans le conduit ;
- un moyen d'extraction liquide depuis le conduit vers le circuit principal, de sorte que la solution hygroscopique est injectée dans le circuit principal après absorption de la vapeur d'eau ;
- un moyen de régénération de la solution alimenté par l'eau froide en sortie du condenseur.

**EP 2 354 710 B1**

Le dispositif selon l'invention est avantageusement complété par les caractéristiques suivantes, prises seules ou en une quelconque de leur combinaison techniquement possible :

- le moyen de régénération met en prise le circuit principal et le circuit de vapeur, la température du circuit principal étant supérieure à celle du circuit de vapeur majorée de la différence de température d'ébullition entre la solution hygroscopique et l'eau pure ;
- le moyen de régénération permet de transférer de l'humidité et/ou de la chaleur depuis la solution hygroscopique diluée extraite du conduit, vers l'eau froide en sortie du condenseur ;
- le moyen de régénération comprend une enceinte basse pression ;
- le moyen de régénération comprend un absorbeur à membranes de distillation ;
- ledit absorbeur à membranes de distillation est constitué de canaux alternés de solution hygroscopique et d'eau séparés par des collecteurs, les parois entre les canaux de solution et les collecteurs étant des membranes de distillation ;
- ledit absorbeur à membranes de distillation est constitué de canaux alternés de solution hygroscopique et d'eau séparés par des membranes de distillation, les deux fluides étant injectés en sens contraire ;
- il comprend un échangeur supplémentaire mettant en prise la solution régénérée et l'eau froide en sortie du moyende régénération.

Le dispositif selon l'invention permet d'utiliser une solution hygroscopique tout en la régénérant sans nécessiter le moindre apport énergétique. Il permet une souplesse d'utilisation compatible avec une consommation variable de vapeur.

Et de plus le dispositif selon l'invention permet par son architecture de transférer efficacement au circuit de vapeur de la centrale à la fois la chaleur latente et la chaleur sensible des fumées.

Ainsi il est possible de diminuer de 40 à 50 % la quantité de vapeur devant être extraite de la turbine pour réchauffer l'eau sortant du condenseur. Toute cette vapeur économisée entraîne un gain direct en production d'électricité, de l'ordre de 2 à 4 % de rendement électrique, d'où des gains économiques significatifs puisque c'est une énergie à très haute valeur ajoutée.

Selon un deuxième aspect, l'invention propose une installation thermique de production d'électricité comprenant une chaudière, des moyens d'évacuation des fumées dont un conduit , un circuit de vapeur sur lequel sont disposés au moins une turbine à vapeur et un condenseur, un alternateur entraîné par la turbine, l'installation étant caractérisée en ce qu'elle comprend en outre un dispositif de récupération de chaleur dans les fumées selon le premier aspect de l'invention.

L'invention propose également un procédé de récupération de chaleur dans des fumées contenant de la vapeur d'eau, circulant dans un conduit, d'une installation thermique de production d'électricité comprenant un circuit de vapeur sur lequel sont disposés au moins une turbine à vapeur et un condenseur, le procédé étant caractérisé en ce qu'il comprend les étapes de :

- injection d'une solution hygroscopique dans le conduit, de sorte que la solution hygroscopique se dilue en absorbant la vapeur d'eau des fumées circulant dans le conduit ;
- extraction de la solution depuis le conduit ;
- évaporation de la vapeur d'eau absorbée par la solution, puis condensation, au niveau d'un moyen de régénération dans lequel sont mis en prise la solution et de l'eau froide provenant du condenseur.

Le procédé selon est avantageusement complété par une étape de transfert thermique depuis la solution hygroscopique reconcentrée vers le circuit de vapeur au niveau d'un échangeur.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1 précédemment décrite est un schéma d'une centrale thermique connue ;
- la figure 2 est un schéma d'une centrale thermique équipée d'un dispositif de récupération de chaleur selon l'invention ;
- la figure 3a est un schéma d'un premier mode de réalisation possible d'un absorbeur à membrane utilisé dans une variante préférée du dispositif de récupération de chaleur selon l'invention ;
- la figure 3b est un schéma d'un second mode de réalisation possible d'un absorbeur à membrane utilisé dans une variante préférée du dispositif de récupération de chaleur selon l'invention;

- les figures 4a-b sont deux graphiques représentant le profil typique des températures et de la concentration en sel d'une solution hygroscopique utilisée par l'invention tombant dans une cheminée de 5m dans laquelle circule des fumées à 180°C.

Sur les différentes figures, les éléments similaires portent les mêmes références numériques, et les valeurs de températures indiquées sont uniquement à titre d'exemple non limitatif.

DESCRIPTION DETAILLEE

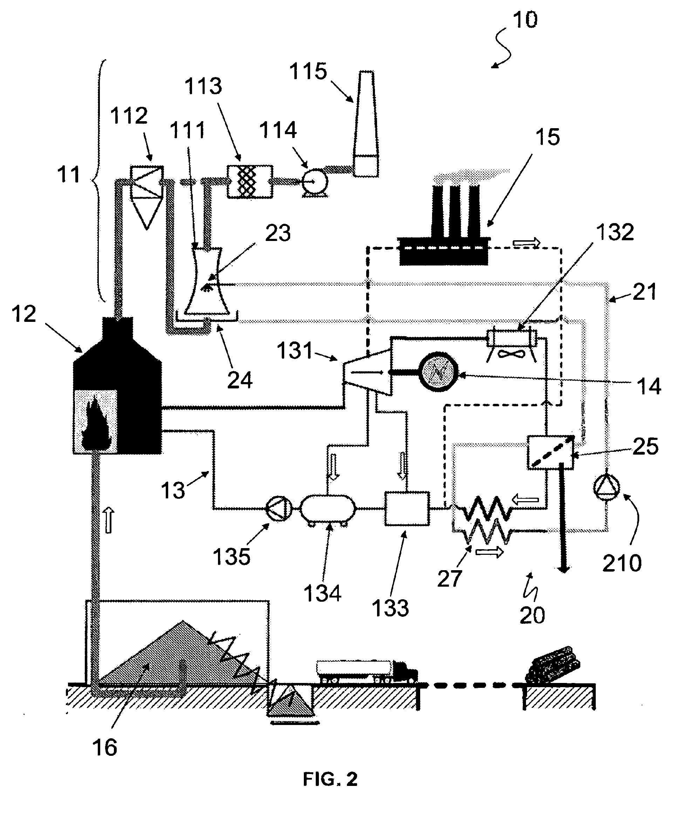

Un dispositif 20 selon l'invention intégré dans une installation thermique de production électrique 10 à biomasse est représenté figure 2.

On retrouve les éléments connus d'une centrale à biomasse représentée figure 1 préalablement décrite. Il faut toutefois mentionner que le dispositif de récupération de chaleur des fumées selon l'invention s'applique en effet particulièrement aux centrales à combustion de biomasse, mais ne leur est pas limité puisqu'il s'applique aussi à toutes les centrales thermiques, c'est-à-dire toutes les centrales qui produisent de l'électricité directement ou indirectement à partir d'une source de chaleur entraînant une turbine, y compris les centrales à gaz, charbon, hydrocarbures...

Le dispositif 20 selon l'invention comprend un circuit 21 qui véhicule une solution s hygroscopique grâce à une ou plusieurs pompes liquide 210. En cas d'incertitude, ce circuit sera désigné en tant que circuit principal du dispositif 20.

La solution s est constituée d'un élément hygroscopique, que l'on désignera par le terme général de « sel », dissout dans l'eau. Par exemple, de manière non limitative, s peut être une solution aqueuse de chlorure de calcium, de bromure de lithium, de chlorure de lithium ou de triéthylène glycol. Ces éléments présentent une grande affinité avec l'eau. En conséquence, ils absorbent de la vapeur d'eau à une température supérieure à celle à laquelle la vapeur se condenserait normalement (point de rosée). Symétriquement, ces solutions bouillent à une température supérieure à celle de l'eau pure. A titre indicatif, pour une solution à 50 % massique de chlorure de calcium dans de l'eau, la courbe "température d'ébullition en fonction de la pression", est décalée d'une vingtaine de degrés par-rapport à l'eau pure.

Le moyen 11 d'évacuation des fumées voit l'ajout d'un conduit préférentiellement vertical 111. On lui ajoute un moyen 23 d'injection d'une solution s hygroscopique depuis le circuit 21, par exemple un brumisateur ou une colonne à garnissage, qui la pulvérise dans le conduit 111, le plus souvent au sommet, pour retomber dans le conduit à contre-courant des fumées pour une meilleure absorption. La chaleur contenue dans ces fumées sous forme de chaleur latente de la vapeur d'eau et de chaleur sensible est ainsi transférée dans la solution qui chauffe et se dilue tandis que les fumées se refroidissent et s'assèchent.

La solution s diluée, porteuse de la chaleur extraite par absorption de la vapeur d'eau dans le gaz, est récupérée généralement à la base du conduit 111 grâce à un moyen 24 d'extraction liquide, qui peut simplement être une bonde.

Le dispositif 20 comprend également un moyen 25 de régénération de la solution s disposé sur le circuit 21. En effet il est nécessaire d'extraire la vapeur d'eau récupérée par la solution pour transférer son énergie au circuit de vapeur 13, et pour pouvoir réutiliser la solution dans un nouveau cycle d'injection dans le conduit 111.

Cependant, il est théoriquement nécessaire de faire chauffer cette solution s diluée, pour en extraire la vapeur d'eau. Le dispositif selon l'invention arrive à se passer de cette étape de chauffage en utilisant les propriétés physiques de ce que l'on appelle la pression de vapeur saturante (Psat). Il s'agit de la pression à laquelle la phase gazeuse d'une substance est en équilibre avec sa phase liquide ou solide. Elle dépend exclusivement de la température. Dans le cas de l'eau, si la pression partielle de vapeur est supérieure à Psat, alors la vapeur va se condenser, et au contraire l'eau va se vaporiser dans le cas inverse. Cela explique pourquoi l'eau s'évapore dans la plupart des cas sans être à 100°C, température à laquelle Psat passe au dessus de la pression atmosphérique, l'eau s'évaporant donc même dans une atmosphère saturée. L'idée de l'invention est de remarquer qu'il a à peu près 25°C d'écart de température d'ébullition entre solution hygroscopique et eau pure, mais une température de condensation unique, celle de l'eau.

En faisant des hypothèses de gaz parfait, d'après la formule de Clapeyron on a :

$$\ln \frac{Psat}{P_0} = \frac{M \times Lv}{R}\left(\frac{1}{T_0} - \frac{1}{T}\right)$$

$T_0$ : température d'ébullition de la substance à une pression $p_0$ donnée, en K
$p_{sat}$ : pression de vapeur saturante, dans la même unité que $p_0$
M : masse molaire de la substance, en kg/mol
$L_v$ : chaleur latente de vaporisation de la substance, en J/kg
R : constante des gaz parfaits, égale à 8,314 J/K/mol
T : température de la vapeur, en K

Dans notre cas, toutes les constantes sont égales entre l'eau et la solution s, à part la température d'ébullition.

On a donc, en faisant un développement limité (car toutes les températures sont proches de 350K) :

$$\ln \frac{Psat_{eau}}{Psat_{solution}} = \ln \frac{Psat_{eau}}{P_0} - \ln \frac{Psat_{solution}}{P_0}$$

$$= \frac{M \times Lv}{R} \left( \left( \frac{1}{T_0} - \frac{1}{T_{eau}} \right) - \left( \frac{1}{T_0 + \Delta T_0} - \frac{1}{T_{solution}} \right) \right)$$

$$\approx \frac{M \times Lv}{R} \times \frac{\Delta T_0 - (T_{solution} - T_{eau})}{T_0^{\,2}}$$

D'ou, $Psat_{eau} < Psat_{solution} \Leftrightarrow \Delta T_0 < (T_{solution} - T_{eau})$

Cette relation signifie qu'à condition que l'écart de température soit supérieur à l'écart de température d'ébullition (ici 25°C + 5°C créant une « force motrice »), en mettant en contact la phase gazeuse de la solution s avec une paroi étanche à l'eau derrière laquelle circule l'eau froide venant du condenseur, on aura spontanément une vaporisation de l'eau contenue dans la solution s, et sa condensation contre la paroi. En effet, puisque la phase vapeur de la solution s et de l'eau qui se recondense est la même, la pression partielle y est la même. Il sera donc impossible d'obtenir un équilibre, et on aura en permanence $Psat_{eau} < P_{vapeur} < Psat_{solution}$ c'est-à-dire une condensation sur la paroi associée à un réchauffement d'après la première inégalité, et une vaporisation de la vapeur d'eau contenue dans la solution s associée à un refroidissement d'après la seconde inégalité. En pratique, la solution s arrive préchauffée par les vapeurs à 85°C, et l'eau refroidie par le condenseur à 33°C. Il y a donc un différentiel suffisant de 50°C. Il est toutefois nécessaire que la paroi présente une forte conductivité thermique pour que l'eau du condenseur puisse absorber la chaleur libérée par la condensation et la paroi reste froide.

Cependant, il n'est pas concevable de réaliser ce transfert de vapeur dans une simple enceinte avec deux bacs. Il prendrait un temps bien trop long, et les températures se seraient équilibrées avant par conduction thermique. En effet les deux pressions saturantes restent très proches.

L'invention propose deux façons ingénieuses d'accélérer ce processus.

Dans un premier mode de réalisation, le moyen 25 peut être une enceinte basse pression. Elle est composée de deux chambres dans lesquelles règne un vide poussé, par exemple 0.03 bars, l'une étant en contact avec l'eau froide du condenseur, et l'autre recevant la solution s. Grâce à cette faible pression la température d'ébullition diminue fortement, et la vaporisation puis la recondensation se font presque instantanément.

Néanmoins, un tel système est contraignant à utiliser à cause des problèmes d'étanchéité.

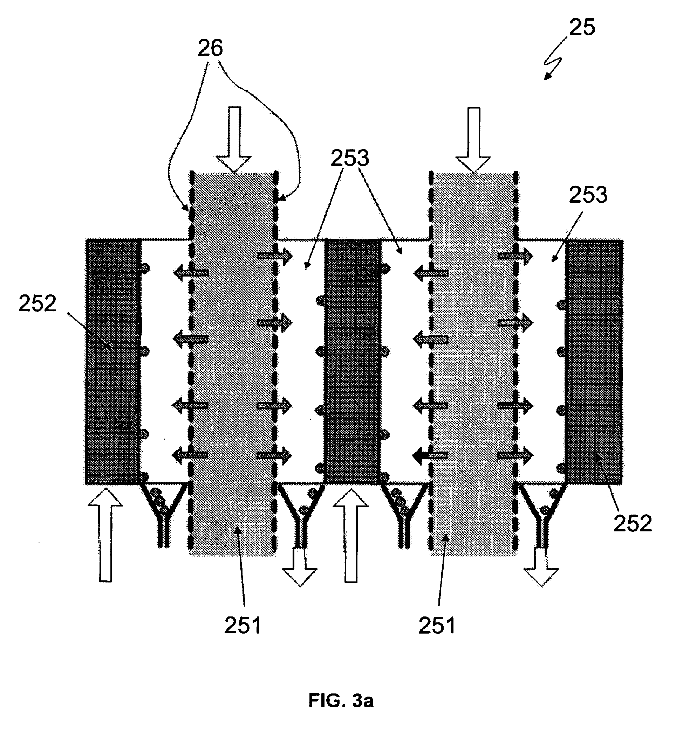

C'est pourquoi l'invention propose, dans un mode de réalisation préféré, d'utiliser un absorbeur à membranes de distillation, représenté sur la figure 3a, ou une combinaison d'un tel absorbeur et de l'enceinte précédente. Ces membranes 26 ont la propriété d'être à la fois hydrophobes (donc ne laissant pas passer l'eau liquide) et perméables à la vapeur d'eau. L'exemple le plus connu d'un de ces matériaux pouvant constituer ces membranes est le Gore-Tex® commercialisé par W. L. Gore & Associates. Ce tissu, à base de tétrafluorure d'éthylène étiré, possède $1,4.10^9$ nano-pores au centimètre carré, chacun ayant un diamètre d'environ 0,2 micromètres. Ils sont donc 20 000 fois plus petits qu'une goutte d'eau mais 700 fois plus grands qu'une molécule d'eau seule. La vapeur d'eau, constituée de molécules fortement distantes les unes des autres n'a aucun mal à passer, au contraire des gouttes d'eau tenues par tension superficielle.

En séparant les deux chambres par une telle membrane 26, la solution s va laisser « transpirer » son eau, qui se vaporise (production de froid), traverse la membrane, et se recondense quelques millimètres plus loin sur la paroi (production de chaud). Il y a ainsi interface quasi-directe entre les deux fluides. Une première structure particulièrement avantageuse pour l'absorbeur est une alternance de canaux parallèles 251 et 252, dans lesquels circulent respectivement la solution hygroscopique s et l'eau pure du condenseur, ces canaux étant séparés par un mince collecteur 253 qui va récupérer l'eau recondensée. La paroi qui sépare un canal 251 et un collecteur 253 est une membrane de distillation 26 dont la conductivité thermique est la plus faible possible. La paroi qui sépare un canal 252 et un collecteur 253 est une paroi étanche ayant la conductivité thermique la plus élevée possible, par exemple une plaque métallique. L'eau condensée est ensuite extraite du dispositif 25. Elle peut être utilisée dans un autre dispositif ou évacuée dans un réseau d'eaux usagées.

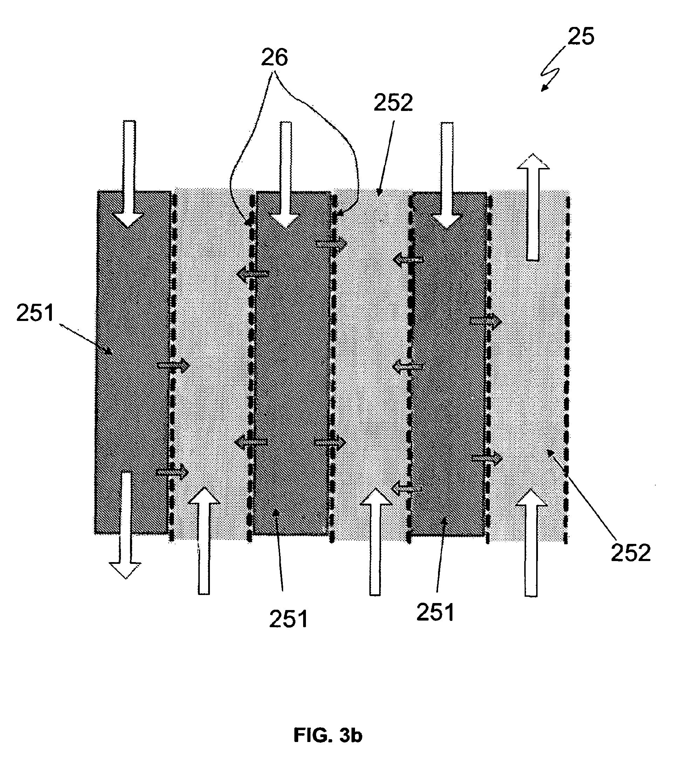

Une seconde solution également très avantageuse est d'utiliser directement une alternance de canaux parallèles 251 et 252 séparés par une membrane 301 sans collecteur 253. La vapeur d'eau se recondense directement dans le circuit d'eau. Ce système est encore plus simple mécaniquement, sa structure est représentée figure 3b. Préférentiellement, ce n'est pas l'eau du circuit 13 qui circule dans les canaux 252, mais celle d'un circuit secondaire 13b en prise avec le circuit 13 juste après le condenseur 132 grâce à un échangeur. En effet, pour des raisons de garantie de la pureté de l'eau circulant dans le circuit de vapeur 13, il vaut mieux séparer les circuits. De plus comme la quantité d'eau augmente, à cause de la condensation, il convient de prévoir une évacuation du volume d'eau excédentaire. Ce circuit 13b est avantageusement également présent dans le cas d'une enceinte basse pression comme décrite précédemment.

Avantageusement, dans un système à membranes comme dans l'autre, les fluides sont injectés à contre courant. Ainsi bien que leur écart de température diminue de plus de 10°C lors de la régénération, cet écart ne concerne que les deux extrémités de l'absorbeur, et deux points voisins séparés seulement par la membrane auront toujours au moins 40°C d'écart, c'est à dire assez pour entretenir le transfert de vapeur. En sortie de l'absorbeur, toute la chaleur latente récupérée par la solution s a été transmise au circuit de vapeur 13.

On obtient donc de la solution s régénérée mais encore chaude. Avantageusement, un échangeur 27 est disposé entre les circuits 21 et 13. Maintenant qu'il n'y a plus besoin d'un différentiel de chaleur pour permettre la régénération de la solution s, on peut transférer la chaleur restante, c'est-à-dire la chaleur sensible, à l'eau de circuit de vapeur 13.

Le dispositif 20 selon l'invention est en outre capable de s'adapter aux variations de consommation du client 15.

Il suffit d'adapter le débit de solution s dans le circuit 21 au débit d'eau froide provenant du condenseur 132 dans le circuit 13, avantageusement en contrôlant la ou les pompes 210 disposées sur le circuit. On peut aussi éventuellement compléter le système par un by-pass court-circuitant le conduit 111 permettant de maîtriser la quantité se solution injectée dans les fumées à débit constant, ou tout autre système connu de l'homme du métier.

EXEMPLE NUMERIQUE

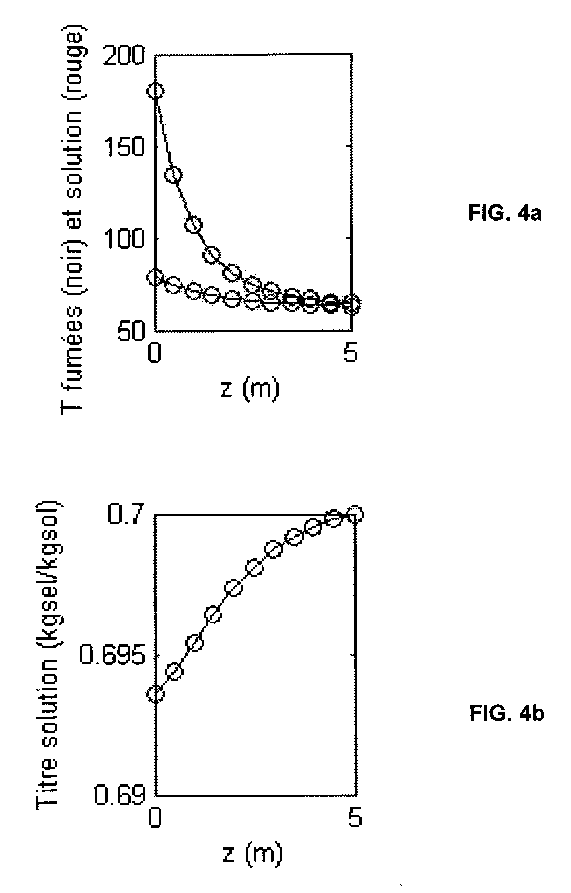

L'impact du dispositif 20 selon l'invention a été évalué sur une petite installation électrique de 3MW, et les graphiques des figures 4a et 4b montrent l'efficacité de la solution hygroscopique sur les fumées. Une injection de solution hygroscopique dans la cheminée à une hauteur de 5m a été prise en compte sur le modèle. A altitude 0 dans le référentiel de la cheminée, la fumée entre à 180°C. Elle rencontre la solution s injectée à 60°C. L'évolution respective des températures est visible sur la figure 4a. En haut de la cheminée, toute la chaleur sensible de la vapeur a été absorbée puisqu'elle n'est plus qu'à 60°C. En revanche, la solution s est récupérée à 80°C. L'absorption d'eau est également là, puisque d'après le graphique de la figure 4b, la concentration massique de la solution passe de 70% à 69,4%. Cette variation parait faible, mais comme la masse du sel représente la majeure partie de la masse de la solution, le volume de la solution augmente en fait de plus de 2%.

La suite de la simulation a consisté en l'utilisation de ces données pour prévoir le gain énergétique, et les résultats expérimentaux sont visibles sur la table 1. La colonne de gauche représente une installation classique, et celle de droite « PACO » est équipée du récupérateur de chaleur des fumées.

Table 1

| RESUME | | | |
|---|---|---|---|
| Production de 20 T/h de vapeur 50 bar à 400oC | | situation | amélioration |
| extraction de 10 T/h de vapeur à 7 bar | | anterieure | PACO |
| | | | |
| puisance globale turbine | kWé | 3000 | 3078 |
| | | | |
| tonnage passant dans le dernier étage de la turbine | T/ heure | 7,563 | 8,45 |
| | | | |
| pression d'attaque du demie étage de la turbine | bar | 1,114 | 1,114 |
| | | | |
| puissance électrique développée par le dernier étage | kWé | 667 | |
| | | | |
| température en sortie de condenseur | °C | 33 | 33 |
| | | | |
| énergie récupérée de la chaleur sensible | kW | | 610 |

(suite)

| RESUME | | | |
|---|---|---|---|
| | | | |
| Tonnage vapeur extrait de la turbine pour | | | |
| réchauffer les condensats (sortie du condenseur et retour process client) | T heure | 1,99 | 1,10 |
| | | | |
| Turbinage de vapeur gagné | T/heure | | 0,89 |
| | | | |
| **Puissance électrique supplémentaire** | **kWé** | | **78,5** |

La chaudière d'une telle installation produit environ 20T de vapeur par heure. En faisant l'hypothèse que la moitié est prélevée par le client consommateur et que le minimum est prélevé pour préchauffer les condensats, il reste classiquement 7,56T de vapeur par heure disponible par heure pour la production électrique, tonnage monté à 8,45 grâce à l'invention.

Cette valorisation permet un gain direct de 78 kW de production électrique. Il peut sembler modeste alors que l'on récupère en fait 610 kW thermique dans les fumées, mais au prix de l'électricité "verte" aujourd'hui, le gain de chiffre d'affaires sur la vente d'électricité atteint 78 000 euros sur 8000 heures/an de production.

## Revendications

1.  Dispositif (20) de récupération de chaleur dans des fumées contenant de la vapeur d'eau, circulant dans un conduit (111), d'une installation thermique (10) de production d'électricité comprenant un circuit de vapeur (13) sur lequel sont disposés au moins une turbine à vapeur (121) et un condenseur (132),

    - un circuit principal (21) pour la circulation d'une solution (s) hygroscopique ;
    - un moyen (23) d'injection liquide depuis le circuit principal (21) vers le conduit (111), de sorte que la solution (s) hygroscopique se dilue en absorbant la vapeur d'eau des fumées circulant dans le conduit (111) ;
    - un moyen (24) d'extraction liquide depuis le conduit (111) vers le circuit principal (21), de sorte que la solution (s) hygroscopique est injectée dans le circuit principal (21) après absorption de la vapeur d'eau ;

    le dispositif étant **caractérisé en ce qu'**il comprend :

    - un moyen (25) de régénération de la solution (s) alimenté par l'eau froide en sortie du condenseur (132).

2.  Dispositif selon la revendication précédente, **caractérisé en ce que** le moyen (25) de régénération met en prise le circuit principal (21) et le circuit (13) de vapeur, la température du circuit principal (21) étant supérieure à celle du circuit (13) de vapeur majorée de la différence de température d'ébullition entre la solution (s) hygroscopique et l'eau pure.

3.  Dispositif selon la revendication précédente, caractérisé en que le moyen (25) de régénération permet de transférer de l'humidité et/ou de la chaleur depuis la solution (s) hygroscopique diluée extraite du conduit (111), vers l'eau froide en sortie du condenseur (132).

4.  Dispositif selon l'une des revendications précédentes, **caractérisé en ce que** le moyen (25) de régénération comprend une enceinte basse pression.

5.  Dispositif selon l'une des revendications précédentes, **caractérisé en ce que** le moyen (25) de régénération comprend un absorbeur à membranes (26) de distillation.

6.  Dispositif selon la revendication précédente, **caractérisé en ce que** ledit absorbeur à membranes de distillation est constitué de canaux alternés (251, 252) de solution (s) hygroscopique et d'eau séparés par des collecteurs (253), les parois entre les canaux (251) de solution (s) et les collecteurs (253) étant des membranes (26) de distillation.

**7.** Dispositif selon la revendication 5, **caractérisé en ce que** ledit absorbeur à membranes de distillation est constitué de canaux alternés (251, 252) de solution (s) hygroscopique et d'eau séparés par des membranes (26) de distillation, les deux fluides étant injectés en sens contraire.

**8.** Dispositif selon l'une des revendications 4 à 7, caractérisé qu'il comprend un échangeur supplémentaire (27) mettant en prise la solution (s) régénérée et l'eau froide en sortie du moyen (25) de régénération.

**9.** Installation thermique (10) de production d'électricité comprenant une chaudière (12), des moyens (11) d'évacuation des fumées dont un conduit (111), un circuit de vapeur (13) sur lequel sont disposés au moins une turbine à vapeur (131) et un condenseur (132), un alternateur (14) entraîné par la turbine (131), l'installation étant **caractérisée en ce qu'**elle comprend en outre un dispositif (20) de récupération de chaleur dans les fumées selon l'une des revendications précédentes.

**10.** Procédé de récupération de chaleur dans des fumées contenant de la vapeur d'eau, circulant dans un conduit (111), d'une installation thermique (10) de production d'électricité comprenant un circuit de vapeur (13) sur lequel sont disposés au moins une turbine à vapeur (131) et un condenseur (132), le procédé comprenant les étapes de :

- injection d'une solution (s) hygroscopique dans le conduit (111), de sorte que la solution (s) hygroscopique se dilue en absorbant la vapeur d'eau des fumées circulant dans le conduit (111) ;
- extraction de la solution (s) depuis le conduit (111) ;

le procéde étant **caractérisé en ce qu'**il comprend l'étape de :

- évaporation de la vapeur d'eau absorbée par la solution (s), puis condensation, au niveau d'un moyen de régénération (25) dans lequel sont mis en prise la solution (s) et de l'eau froide provenant du condenseur (132).

**11.** Procédé selon la revendication précédente, comprenant en outre une étape de transfert thermique depuis la solution (s) hygroscopique reconcentrée vers le circuit de vapeur (13) au niveau d'un échangeur (27).

**Patentansprüche**

**1.** Vorrichtung (20) zur Wärmerückgewinnung aus Abgasen, die Wasserdampf enthalten, die in einer Leitung (111) strömen und die von einer Wärmekraftanlage (10) zur Elektrizitätsproduktion kommen, Folgendes umfassend: einen Dampfkreislauf (13), in dem wenigstens eine Dampfturbine (121) und ein Kondensator (132) angeordnet sind,

- einen Hauptkreislauf (21) für die Zirkulation einer hygroskopische Lösung (s);
- ein Mittel (23) zum Einbringen von Flüssigkeit aus dem Hauptkreislauf (21) in die Leitung (111), derart, dass die hygroskopische Lösung (s) sich mit dem Absorbieren des Wasserdampfs der Abgase, die in der Leitung (111) strömen, verdünnt;
- ein Mittel (24) zur Flüssigkeitsentnahme aus der Leitung (111) in den Hauptkreislauf (21), derart, dass die hygroskopische Lösung (s) nach dem Absorbieren des Wasserdampfs in den Hauptkreislauf (21) zugeführt wird;

wobei die Vorrichtung **dadurch gekennzeichnet ist, dass** sie Folgendes umfasst:

- ein Mittel (25) zum Regenerieren der Lösung (s), das durch das kalte Wasser am Ausgang des Kondensators (132) gespeist wird.

**2.** Vorrichtung nach dem vorhergehenden Anspruch, **dadurch gekennzeichnet, dass** das Mittel (25) zum Regenerieren den Hauptkreislauf (21) und den Dampfkreislauf (13) miteinander in Kontakt bringt, wobei die Temperatur des Hauptkreislaufs (21) höher ist als diejenige des Dampfkreislaufs (13) zuzüglich der Differenz der Siedetemperatur zwischen der hygroskopischen Lösung (s) und reinem Wasser.

**3.** Vorrichtung nach dem vorhergehenden Anspruch, **dadurch gekennzeichnet, dass** das Mittel (25) zum Regenerieren das Übertragen der Feuchtigkeit und/oder der Wärme von der verdünnten hygroskopischen Lösung (s), die der Leitung (111) entnommen ist, auf das kalte Wasser am Ausgang des Kondensators (132) gestattet.

**4.** Vorrichtung nach einem der vorhergehenden Ansprüche, **dadurch gekennzeichnet, dass** das Mittel (25) zum

9

Regenerieren eine Niederdruckhülle umfasst.

5. Vorrichtung nach einem der vorhergehenden Ansprüche, **dadurch gekennzeichnet, dass** das Mittel (25) zum Regenerieren einen Destillationsmembranabsorber (26) umfasst.

6. Vorrichtung nach dem vorhergehenden Anspruch, **dadurch gekennzeichnet, dass** der Destillationsmembranabsorber aus abwechselnden Kanälen (251, 252) mit hygroskopischer Lösung (s) und mit Wasser, getrennt durch Sammler (253), besteht, wobei die Wände zwischen den Kanälen (251) mit Lösung (s) und den Sammlern (253) Destillationsmembranen (26) sind.

7. Vorrichtung nach Anspruch 5, **dadurch gekennzeichnet, dass** der Destillationsmembranabsorber aus abwechselnden Kanälen (251, 252) mit hygroskopischer Lösung (s) und mit Wasser, getrennt durch Destillationsmembranen (26), besteht, wobei die zwei Fluide in entgegengesetzten Richtungen zugeführt werden.

8. Vorrichtung nach einem der Ansprüche 4 bis 7, **dadurch gekennzeichnet, dass** sie einen zusätzlichen Wärmetauscher (27) umfasst, der die regenerierte Lösung (s) und das kalte Wasser am Ausgang des Mittels (25) zum Regenerieren in Kontakt bringt.

9. Wärmekraftanlage (10) zur Elektrizitätsproduktion, die Folgendes umfasst: einen Heizkessel (12), ein Mittel (11) zum Abführen der Abgase, darunter eine Leitung (111), einen Dampfkreislauf (13), in dem wenigstens eine Dampfturbine (131) und ein Kondensator (132) angeordnet sind, einen Generator (14), der von der Turbine (131) angetrieben wird, wobei die Anlage **dadurch gekennzeichnet ist, dass** sie außerdem eine Vorrichtung (20) zur Wärmerückgewinnung aus den Abgasen gemäß einem der vorhergehenden Ansprüche umfasst.

10. Verfahren zur Wärmerückgewinnung aus Abgasen, die Wasserdampf enthalten, die in einer Leitung (111) strömen und die von einer Wärmekraftanlage (10) zur Elektrizitätsproduktion kommen, Folgendes umfassend: einen Dampfkreislauf (13), in dem wenigstens eine Dampfturbine (131) und ein Kondensator (132) angeordnet sind, wobei das Verfahren die folgenden Schritte umfasst:

   - Einbringen einer hygroskopischen Lösung (s) in die Leitung (111), derart, dass die hygroskopische Lösung (s) sich mit dem Absorbieren des Wasserdampfs der Abgase, die in der Leitung (111) strömen, verdünnt;
   - Entnehmen der Lösung (s) aus der Leitung (111);

   wobei das Verfahren **dadurch gekennzeichnet ist, dass** es den folgenden Schritt umfasst:

   - Verdampfen des von der Lösung (s) absorbierten Wasserdampfs und anschließendes Kondensieren im Bereich eines Mittels zum Regenerieren (25), in dem die Lösung (s) und kaltes Wasser, das vom Kondensator (132) kommt, in Kontakt gebracht werden.

11. Verfahren nach dem vorhergehenden Anspruch, das außerdem einen Schritt zur Wärmeübertragung von der erneut konzentrierten hygroskopischen Lösung (s) zum Dampfkreislauf (13) im Bereich eines Wärmetauschers (27) umfasst.

**Claims**

1. A device (20) for recovering heat from flue gases containing steam circulating in a duct (111) of a thermal power plant (10) producing electricity, comprising:

   - a steam circuit (13) on which there are arranged at least one steam turbine (121) and a condenser (132) ;
   - a main circuit (21) for the circulation of a hygroscopic solution (s);
   - liquid injection means (23) from the main circuit (21) towards the duct (111) so that the hygroscopic solution (s) is diluted by absorbing the steam in the flue gases circulating in the duct (111);
   - liquid extraction means (24) from the duct (111) towards the main circuit (21) so that the hygroscopic solution (s) is injected into the main circuit (21) after absorbing steam;

   the device being **characterized in that** it comprises:

- means (25) for regenerating the solution (s), supplied with cold water at the output from the condenser (132).

2. The device according to the preceding claim, **characterized in that** the regenerating means (25) engage the main circuit (21) with the steam circuit (13), the temperature of the main circuit (21) being higher than that of the steam circuit (13) increased by the difference in boiling point between the hygroscopic solution (s) and pure water.

3. The device according to the preceding claim, **characterized in that** the regenerating means (25) allow transfer of the moisture and/or of the heat from the diluted hygroscopic solution (s) extracted from the duct (111) towards the cold water at the output of the condenser (132).

4. The device according to one of the preceding claims, **characterized in that** the regenerating means (25) comprise a low pressure chamber.

5. The device according to one of the preceding claims, **characterized in that** the regenerating means (25) comprise a distilling membrane absorber (26).

6. The device according to the preceding claim, **characterized in that** the said distilling membrane absorber is formed of alternate channels (251, 252) of hygroscopic solution (s) and water separated by collectors (253), the walls between the channels (251) of the solution (s) and the collectors (253) being distilling membranes (26).

7. The device according to claim 5, **characterized in that** the said distilling membrane absorber is formed of alternate channels (251, 252) of hygroscopic solution (s) and water separated by distilling membranes (26), the two fluids being injected in opposite direction.

8. The device according to one of claims 4 to 7, **characterized in that** it comprises an additional exchanger (27) bringing together the regenerated solution (s) and cold water at the output of the regenerating means (25).

9. A thermal power plant (10) for producing electricity comprising a boiler (12), means (11) for evacuating flue gases including a duct (111), a steam circuit (13) on which are arranged at least one steam turbine (131) and a condenser (132), an alternator (14) driven by the turbine (131), the plant being **characterized in that** it further comprises a device (20) for recovering heat from the flue gases according to one of the preceding claims.

10. A method for recovering heat from flue gases containing steam circulating in a duct (111) of a thermal plant (10) producing electricity comprising a steam circuit (13) on which are arranged at least one steam turbine (131) and a condenser (132), the method comprising the steps of :

- injecting a hygroscopic solution (s) into the duct (111) so that the hygroscopic solution (s) dilutes by absorbing steam from the flue gases circulating in the duct (111);
- extracting the solution (s) from the duct (111);

the method being **characterized in that** it comprises the step of:

- evaporating the steam absorbed by the solution (s) followed by condensation at regenerating means (25) in which the solution (s) and cold water from the condenser (132) are brought together.

11. The method according to the preceding claim further comprising a heat transfer step from the re-concentrated hygroscopic solution (s) towards the steam circuit (13) at an exchanger (27).

FIG. 1
Etat de la technique

**FIG. 2**

FIG. 3a

**FIG. 3b**

**FIG. 4a**

**FIG. 4b**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0857923 A
- US 4340572 A
- DE 3916705